# EUROPEAN PATENT SPECIFICATION

(11) **EP 4 256 301 B1**
(45) Date of publication and mention of the grant of the patent: **24.09.2025**
(21) Application number: 20963823.8
(22) Date of filing: 01.12.2020
(51) Int. Cl.: G01N 1/30, G01N 1/31, G01N 1/44, G01N 1/06, G01N 1/36

(54) **VARIABLE POWER COLD MICROWAVE TISSUE PROCESSOR**
KALTMIKROWELLEN-GEWEBEPROZESSOR MIT VARIABLER LEISTUNG
PROCESSEUR DE TISSUS À MICRO-ONDES FROIDES À PUISSANCE VARIABLE

(43) Date of publication of application: 11.10.2023
(73) Proprietor: Pathronix Corp., Thornhill, Ontario L3T 7N1 (CA)
(72) Inventor: OVEISI, Behrouz, Newmarket, Ontario L3X 3J4 (CA); MOADDAB, Seyed Mohsen, Khoy, East Azarbaijan (IR)
(74) Representative: Schweiger, Martin
(86) International application number: PCT/CA2020/000130
(87) International publication number: WO 2022/115933

(56) References cited:
- EP-A1- 0 822 403
- EP-A1- 2 278 295
- US-A1- 2003 197 008
- US-A1- 2005 269 315
- US-A1- 2012 129 169
- US-B1- 6 325 391
- US-B1- 7 273 720

## Description

### FIELD OF THE INVENTION

The present invention relates in general to methods and devices for preparing cells for microscopic examination, and in particular to tissue processing for embedding cells and tissues in a solid substrate, for later microtome cutting.

### BACKGROUND OF THE INVENTION

Many disease processes can only be diagnosed on the basis of histologic or cytologic examination using a light microscope. For instance, direct pathological analysis of a cell is needed to determine if a tumor is benign or malignant. Such analysis requires thin slices of the sample tissue which are obtained by first embedding the tissue in a solid material, a process called tissue processing, and then cutting the embedded tissue with a microtome. Tissue processing comprises of the following steps: (1) Water removal from the sample. In order to do this, a dehydrating reagent, usually an alcohol, which is miscible with water is used to remove the water. The dehydrating reagent is diffused into and out of sample tissue multiple times to remove the water content of the tissue. This step is referred to as dehydration steps. (2) Replacement of the dehydrating agent with a clearing reagent., xylene, which is miscible with alcohol, is typically used for this process. In this step, all fatty substances are also removed by the solution. (3) Finally, the clearing reagent, the xylene, is removed and replaced with a histological substance, which is usually a paraffin wax, which is miscible with xylene but not with most alcohols or water. Prior to dehydration step, however, the tissue sample must be immersed in a fixative reagent to prevent autolysis, putrefaction and other unwanted cellular changes. There are a large number of histological fixatives. The most commonly used fixatives is 10% neutral buffered (NB) formaldehyde solutions.

Tissue processing is routinely done on an instrument named Tissue Processor. One of the issues with the current processors is the time it takes to complete these processes. It typically takes anywhere from 8 to 16 hours to complete the process because the extraction of water, alcohol, fats, and xylene in the tissue processor is time consuming. Turnaround time is an important quality indicator in pathology and on average, about a quarter (24%) of routine pathology cases are not reported on time and do not meet the accepted level of the College of American Pathologists' (CAP) standard turnaround time, which states at least 90% of routine pathology cases should be reported and verified within two days.

A conventional tissue processor is known from US2012/0129169A1.

Tissue samples taken out of the body will decompose due to loss of blood supply and oxygen, accumulation of the products of metabolism, action of autolytic enzymes, and putrefaction by bacteria. There are also other difficulties in this process, including: softness of tissues renders the process of section cutting very difficult; tissue doesn't have clear optical contrast for good morphologic examination, and tissue doesn't act as a mordant.

Another issue with the current processes is that they use Formalin as a fixative reagent to preserve the tissue sample. Formalin is a hazardous chemical. It is a potent and colourless substance that is commonly used in hospitals and medical laboratories as a disinfectant, and preservative of anatomical specimens. Its toxicity is well-documented, as it may trigger severe allergic reactions such as difficulty breathing, asthma attacks, respiratory irritation, headaches, and watery/burning eyes. Formalin is a skin irritant, a carcinogen, and if ingested can be fatal.

Immunohistochemistry (IHC) is routinely used in diagnostic pathology to detect infectious agents, to immunophenotype neoplastic cells, and to prognosticate neoplastic diseases. Formalin fixation is considered a limiting factor for IHC because formalin can cross-link antigens and mask epitopes. Prolonged formalin fixation is presumed to result in decreased antigen detection Elimination of Formalin may improve the IHC results significantly. The present invention is aimed to resolve the above mentioned issues.

### SUMMARY OF THE INVENTION

The present invention provides a method and apparatus that utilizes a flow-through processing and embedding technique for rapidly embedding cells. The present tissue processing method, comprises of the following steps. The tissue samples are placed inside an especially designed microwave oven that is attached to a cooling cycle. The microwave oven is filled with a fixative reagent, and the fixative reagent is heated to a set temperature in the range of 40-60° Celsius. The temperature is then kept at that set temperature by circulating the fixative reagent through a temperature controller system and while in the microwave oven. The fixative reagent is then removed and replaced with a first dehydrating reagent, which is then heated to a set temperature in the range of 40-60° Celsius. Again, the liquid temperature is kept constant. The process is repeated by draining the first dehydrating reagent and replacing it first with a second dehydrating reagent and then by a clearing agent. Once the tissue samples are embedded with a clearing agent, they are transferred to a paraffin oven. The paraffin oven is filled with paraffin, and the whole system is heated until paraffin replaces the clearing agent, resulting in paraffin embedded tissues.

The method of the present invention is defined in claim 1, the apparatus of the present invention is defined in claim 10.

This flow-through processing maximizes the efficiency of cell recovery and of extractions during embedding, thereby decreasing the amount of cellular sample required, minimizing the amount of time for processing, and minimizing the amount of reagents needed for embedding. The method and apparatus also automatically places cells at the plane in the cell block where they need to be sectioned without diluting them with carrier substances. In addition, the method and apparatus minimizes or eliminates the potential for mislabeling of a cell block or cross contamination between two different cell samples. Finally, the method allows customization and standardization of cell preservation or cell embedding conditions to facilitate cell research.

The first objective of the present invention is to provide a method to provide a superior tissue specimen quality.

The second objective of the present invention is to fully eliminate Formalin and Xylene in the process.

The third objective of the present invention is to process any kind of tissues, even fatty tissues and any density, and through a single protocol.

The fourth objective of the present invention is to provide a closed and sealed reagent containers for increasing user safety.

The fifth objective of the present invention is to provide a short processing time (reducing the current times by 45%-85%).

The sixth objective of the present invention is to eliminate the antigen retrieval step for proper IHC staining.

The seventh objective of the present invention is to provide a low temperature process for protecting tissue structure.

The eighth objective of the present invention is to have a cost-effective system by using only 4 reagents, reducing technician cost and shortening processing time.

And the nineth objective of the present invention is to reduce pre-analytical errors by eliminating tissue sorting and protocol choose errors

### BRIEF DESCRIPTION OF THE DRAWINGS

The invention can be more fully understood from the following detailed description taken in conjunction with the accompanying drawings, in which:

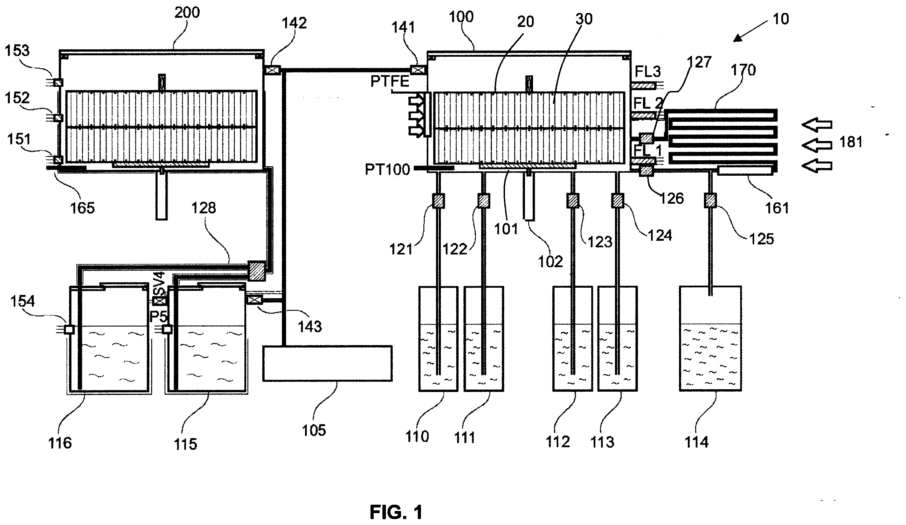

FIG. 1 is a detailed view of one embodiment of the present tissue processing method.

### DETAILED DESCRIPTION OF PREFERRED EMBODIMENTS

The present invention provides a method and apparatus for tissue processing to prepare a cell block for sectioning with a microtome. The tissue processing apparatus **10** of the present invention is designed as a flow-through system and is shown in **FIG. 1****.** It comprises of a microwave heated processing oven **100** configured to receive a basket **20** of tissue sample holders **30.** The processing oven is configured to receive a variety of fluids including fixative, dehydrating (alcohol) and clearing reagents, which are held in a fixative reagent container **110,** dehydrating reagent containers **111** and **112,** and clearing reagent container **113,** and are connected to the oven through flow paths having ball valves **121, 122, 123,** and **124,** respectively.

### Fixation Process

The fixatives reagent comprises: (1) Phosphate buffer saline +0.1 to 1.0-gram/L thymol or (2) Low concentration of formalin 0.1% to 1% NB. In the

Fixation: In step one of the process, tissue samples **30** are placed in the processing oven **100** and the fixative reagent **110** is transferred to the processing oven **100** by a negative pressure that is generated inside the oven using a vacuum pump **105.** The negative pressure is generated by opening valve **141** to generate negative pressure of 200 to 700 mbar in the process oven. The valve **121** of the fixative flow line is opened to allow fixative to fill the oven. Fluid level meters, **FL1, FL2,** and **FL3** measure the fluid level. The level of the reagent is controlled by a liquid level sensor **FL3.** When the reagent reaches a pre-determined level, the vacuum stops working, and the ball valve **121** is closed. A variety of level sensors, including capacitive sensors or fiber optic sensors can be used. A variable power microwave having a power in the range of 200 to 700 watts, emits energy into the chamber of the oven through a PTFE sealed window. Stirrer motor **102** start working at 40 to 400 rpm. At this point, the reagent is heated by the microwave **100** to reach a temperature of 40-50° Celsius and the tissue sample holders start to turn by a rotating plate **101** having a motor **102** at 50 to 100 rpm, for protecting from hot spots and maintaining thermal homogeneity. When the reagent temperature reaches the pre-determined point (40-50° Celsius), valves **126** and **127** are opened and the circulating pump **161** stars working to eliminate reagent overheating while the microwave is working. The power of the microwave is adjusted depending of fluid level. When the duration of the fixing process reaches a set value, the reagent transfers to a waste container **114.**

A cooling system **170** with a Peltier or a fan (air flow) **181** with PWM (Pulse-width modulation control), keeps the reagent temperature at the predetermined temperatures while the microwave is still working. When fixation time reaches a predetermined fixation time, the microwave turns off and a valve **125** opens allowing fluid to transfer from the processing oven **100** to a waste container **114.** When all fluid level sensors **FL1, FL2,** and **FL3** are turned off, valves **125,** and **126** and **127** for the cooling system **170** are closed and the circulating pump **161** is turned off.

### Dehydration Process 1

Dehydrating reagents: Ethyl alcohol 80 to 95%. Isopropyl alcohol 80 to 95%.

**Dehydration step 1:** Vacuum **105** and valve **141** turn on and cause negative pressure 200 to 700 mbar in process oven. Valve **122** opens and the dehydrating reagent **111** transfers to process oven **100,** while flow level sensors turn on. Once flow level sensor **FL3** is turned on, the vacuum is turned off and valve **122** is closed. Stirrer motor **102** starts working at 40 to 400 rpm. Variable power microwave 200 to 700 watt emits into the chamber via PTFE sealed window. The reagent gets warmed by the microwave and when the temperature reaches a predetermined dehydration, of 20° to 60° Celsius, cooling line valves **126** and **127** are opened and the circulating pump **161** starts working. Cooling system with Peltier or fan (air flow) **181** with PWM (Pulse-width modulation fan) hold the reagent temperature at the predetermined values, while the microwave is still working. When the dehydration time reaches the predetermined dehydration step 1 time, the microwave turns off and valve **125** opens. Fluid transfers from processing oven to waste container, and when all flow level sensors **FL1, FL2,** and **FL3,** are turned off, the waste tank valve **125,** and the colling line valves **126,** and **127** are closed and the circulating pump **161** is turned off.

### Dehydration Process 2

**Dehydrating reagents:** Ethyl alcohol 99.9% and Isopropyl alcohol 99.9%

**Dehydration step 2:** In the second dehydration process, the vacuum system and valve **141** are turned on and cause negative pressure 200 top 700 mbar in process oven. Valve **112** is opened, and the dehydrating reagent transfers to the process oven until all flow level sensors **FL1, FL2,** and **FL3** are turned on, at which point the vacuum and flow valve **123** are turned off. Stirrer motor **102** starts working with 40 to 400 rpm. Variable power microwave, 200 to 700 watts, emits energy into the oven chamber through a PTFE sealed window. The reagent gets warm by microwave and when the temperature reaches the predetermined dehydration step 2 temperature of 20° to 60° Celsius, valves **126** and **127** are opened and the circulating pump **161** starts working. Cooling system **170** with Peltier or fan (air flow) **181** with PWM controlling holds the reagent temperature at the predetermined set value while the microwave is still working. When the dehydration time reaches the predetermined dehydration step 2 time, the microwave turns off and valve **125** opens. Fluid transfers from the processing oven to waste container 114, until all level sensors **FL1, FL2,** and **FL3,** are turned off, then valves **126** and **127** of the cooling system are closed and the circulating pump is turned off.

### Clearing Process:

**Clearing reagents:** (1) 5% to 95% Hexane, + 5% to 95% Isopropyl alcohol 99.9%. (2) 5% to 95% Heptane, 5% to 95% Isopropyl alcohol 99.9%. (3) 5% to 95% Hexane, 5% to 95% Heptane, +5% to 95% Isopropyl alcohol 99.9%.

**Clearing process steps:** Vacuum **105** is turned on and valve **141** is opened to cause negative pressure 200 to 700 mbar in process oven. Valve **113** is opened and the clearing reagent transfers to the process oven, while level sensors **FL1, FL2, FL3** check the level as the vacuum. Stirrer motor starts working at 40 to 400 rpm. Variable power microwave emits 200 to 700 watts of energy into the chamber via PTFE sealed window. The reagent gets warm by microwave and when the temperature reaches the predetermined clearing temperature set value (20° to 60° Celsius), cooling flow line valves **126** and **127** open and the circulating pump starts working. When the clearing time reaches the predetermined clearing time, the microwave turns off and valve **125** opens. Fluid transfers from processing oven to waste container, and when all level sensors **FL1, FL2, FL3** are off, then valves **125, 126,** and **127** are closed and the circulating pump is turned off.

### Paraffinization Process

**Paraffinization steps:** Once the clearing step is completed, the basket is transferred into a paraffin oven **200.** In the paraffin step, the tissue holder is turned at 50 to 100 rpm for thermal homogeneity. The melted paraffin transfers from paraffin container **115** to paraffin oven **200** and vacuum. The heater starts working to reduce the boiling point of the remaining clearing reagent in tissues to replace it with melted paraffin. After a specified time, the paraffin transfers back to the paraffin container 115 and the same process is repeats through a second paraffin container **116.** At the end of the this process the tissues are ready for embedding.

The present tissue processing method has several advantages over the currently available methods. One that it significantly reduces the processing time. Another that is does not use Formalin and Xylene, which are both environmentally hazardous substances. It can also process a wide range of tissue sample sizes all in the same cycle and through a single protocol. It also eliminates the antigen retrieval step for proper IHC staining.

The present method is referred to as Cold Microwave (VCM) tissue processor, since the fluid temperatures are kept low. This process has a substantially shortens time from specimen reception to diagnosis without compromising the overall quality of the histologic section. This allows for biopsy and definitive surgery on the same day, thereby decreasing patient expense and the requirement for multiple trips between home and the referral center.

The foregoing is considered as illustrative only of the principles of the invention.

## Claims

1. A tissue processing method, comprising the steps of:
a) placing one or more tissue samples in a microwave oven;
b) filling the microwave oven with a fixative reagent up to a predetermined level;
c) heating the fixative reagent by the microwave oven to a temperature in the range of 40-60° Celsius and keeping it at that temperature for a predefined amount of time;
d) circulating the fixative reagent through a temperature controller system to keep its temperature constant while in the microwave oven and prevent overheating while the microwave is working;
e) draining the fixative reagent from the oven;
f) filling the microwave oven with a first dehydrating reagent up to a predetermined level;
g) heating the first dehydrating reagent by the microwave oven to a temperature in the range of 40-60° Celsius and keeping it at that temperature for a predefined amount of time;
h) circulating the first dehydrating reagent through a temperature controller system to keep its temperature constant while in the microwave oven and prevent overheating while the microwave is working;
i) draining the first dehydrating reagent from the oven;
j) filling the microwave oven with a second dehydrating reagent up to a predetermined level;
k) heating the second dehydrating reagent by the microwave oven to a temperature in the range of 40-60° Celsius and keeping it at that temperature for a predefined amount of time;
l) circulating the second dehydrating reagent through a temperature controller system to keep its temperature constant while in the microwave oven and prevent overheating while the microwave is working;
m) draining the second dehydrating reagent from the oven;
n) filling the microwave oven with a clearing agent up to a predetermined level;
o) heating the clearing agent by the microwave oven to a temperature in the range of 40-60° Celsius and keeping it at that temperature for a predefined amount of time;
p) circulating the clearing agent through a temperature controller system to keep its temperature constant while in the microwave oven and prevent overheating while the microwave is working;
q) draining the clearing agent from the oven;
r) transferring the one or more tissue samples to a paraffin oven;
s) filling the paraffin oven with a paraffin to a predetermined level;
t) heating the paraffin and the one or more tissue samples while rotating them at about 50 to 100 rpm for thermal homogeneity;
u) replacing the clearing reagent in the one or more tissue samples with paraffin;
v) draining the paraffin from the paraffin oven, and
w) embedding tissues with paraffin.

2. The tissue processing method of claim 1, wherein the fixative reagent is transferred to the microwave oven by generating a negative pressure inside the microwave oven.

3. The tissue processing method of claim 1, wherein the negative pressure inside the microwave oven and the paraffin oven is between 200 to 700 mbar.

4. The tissue processing method of claim 1, wherein the fixative reagent comprises of a phosphate buffer saline of 0.1 to 1.0 gram/L thymol and Formalin 0.1 to 1% NB.

5. The tissue processing method of claim 1, rotating the rotating plate at 40-400 rpm.

6. The tissue processing method of claim 1, wherein the first dehydrating reagents comprises of 80 to 95% Ethyl alcohol and 80 to 95% Isopropyl alcohol.

7. The tissue processing method of claim 1, wherein the second dehydrating reagents comprises of 99% Ethyl alcohol and 99% Isopropyl alcohol.

8. The tissue processing method of claim 1, wherein the clearing reagent is anyone of
a) 5% to 95% Hexane, + 5% to 95% Isopropyl alcohol 99.9%;
b) 5% to 95% Heptane, 5% to 95% Isopropyl alcohol 99.9%, and
c) 5% to 95% Hexane, 5% to 95% Heptane, +5% to 95% Isopropyl alcohol 99.9%.

9. The tissue processing method of claim 1, wherein the paraffin oven is a microwave heating oven.

10. A tissue processing system, comprising:
a) a microwave oven configured to receive a basket of tissue samples and configured to receive a variety of fluids, wherein the power of the microwave oven is adjustable, and wherein
i) the microwave oven is equipped with a rotating plate having a motor, for protecting from hot spots and maintaining thermal homogeneity, and
ii) the power of the microwave oven is between 200 to 700 watts;
b) a flow circulating cooling system to keep the temperature of the fluids inside the microwave at a predetermined temperature;
c) a vacuum pump connected to the microwave oven to generate vacuum inside the microwave oven;
d) a fixative reagent container, a first and a second alcohol containers, a clearing agent container, each connected to the microwave oven through a flow path having a ball valve;
e) a waste liquid container connected to the microwave oven, and
f) a paraffin oven.

11. The tissue processing system of claim 10, wherein the cooling system is a Peltier or an air fan with PWM controller.

12. The tissue processing system of one of claims 10 or 11, wherein the microwave oven has variable power.

13. The tissue processing system of one of claims 10 to 12, wherein the motor can rotate at 50 to 100 rpm.

14. The tissue processing system of one of claims 10 to 13, wherein the microwave oven is equipped with a PTFE sealed window.

15. The tissue processing system of one of claims 10 to 13, further comprising a clearing reagent container 113 being connected to the oven.

## Patentansprüche

1. Gewebeverarbeitungsverfahren, aufweisend die Schritte:
a) Einbringen einer oder mehrerer Gewebeproben in einen Mikrowellenofen;
b) Füllen des Mikrowellenofens mit einem Fixierreagenz bis zu einem vorbestimmten Füllstand;
c) Erhitzen des Fixierreagenzes durch den Mikrowellenofen auf eine Temperatur im Bereich von 40 bis 60 °C und Halten desselben auf dieser Temperatur für eine vordefinierte Zeitdauer;
d) Zirkulieren des Fixierreagenzes durch ein Temperatursteuersystem, um seine Temperatur in dem Mikrowellenherd konstant zu halten und eine Überhitzung während des Betriebs der Mikrowelle zu verhindern;
e) Ablassen des Fixierreagenzes aus dem Ofen;
f) Füllen des Mikrowellenofens mit einem ersten Dehydratisierungsreagenz bis zu einem vorbestimmten Füllstand;
g) Erhitzen des ersten Dehydratisierungsreagenzes durch den Mikrowellenofen auf eine Temperatur im Bereich von 40 bis 60 °C und Halten desselben auf dieser Temperatur für eine vordefinierte Zeitdauer;
h) Zirkulieren des ersten Dehydratisierungsreagenzes durch ein Temperatursteuersystem, um seine Temperatur in dem Mikrowellenherd konstant zu halten und eine Überhitzung während des Betriebs der Mikrowelle zu verhindern;
i) Ablassen des ersten Dehydratisierungsreagenzes aus dem Ofen;
j) Füllen des Mikrowellenofens mit einem zweiten Dehydratisierungsreagenz bis zu einem vorbestimmten Füllstand;
k) Erhitzen des zweiten Dehydratisierungsreagenzes durch den Mikrowellenofen auf eine Temperatur im Bereich von 40 bis 60 °C und Halten desselben auf dieser Temperatur für eine vordefinierte Zeitdauer;
l) Zirkulieren des zweiten Dehydratisierungsreagenzes durch ein Temperatursteuersystem, um seine Temperatur in dem Mikrowellenherd konstant zu halten und eine Überhitzung während des Betriebs der Mikrowelle zu verhindern;
m) Ablassen des zweiten Dehydratisierungsreagenzes aus dem Ofen;
n) Füllen des Mikrowellenofens mit einem Reinigungsmittel bis zu einem vorbestimmten Füllstand;
o) Erhitzen des Reinigungsmittels durch den Mikrowellenofen auf eine Temperatur im Bereich von 40 bis 60 °C und Halten desselben auf dieser Temperatur für eine vordefinierte Zeitdauer;
p) Zirkulieren des Reinigungsmittels durch ein Temperatursteuersystem, um seine Temperatur in dem Mikrowellenherd konstant zu halten und eine Überhitzung während des Betriebs der Mikrowelle zu verhindern;
q) Ablassen des Reinigungsmittels aus dem Ofen;
r) Überführen der einen oder mehreren Gewebeproben in einen Paraffinofen;
s) Füllen des Paraffinofens mit einem Paraffin bis zu einem vorbestimmten Füllstand;
t) Erhitzen des Paraffins und der einen oder mehreren Gewebeproben unter Drehung derselben mit etwa 50 bis 100 U/min zur thermischen Homogenität;
u) Ersetzen des Reinigungsreagenzes in der einen oder den mehreren Gewebeproben durch Paraffin;
v) Ablassen des Paraffins aus dem Paraffinofen und
w) Einbetten von Geweben in Paraffin.

2. Gewebeverarbeitungsverfahren nach Anspruch 1, wobei das Fixierreagenz durch Erzeugen eines negativen Drucks in dem Mikrowellenofen in den Mikrowellenofen überführt wird.

3. Gewebeverarbeitungsverfahren nach Anspruch 1, wobei der negative Druck in dem Mikrowellenofen und in dem Paraffinofen zwischen 200 und 700 mbar ist.

4. Gewebeverarbeitungsverfahren nach Anspruch 1, wobei das Fixierreagenz eine phosphatgepufferte Salzlösung mit 0,1 bis 1,0 Gramm/Liter Thymol und 0,1 bis 1 %NB Formalin aufweist.

5. Gewebeverarbeitungsverfahren nach Anspruch 1, wobei die Drehplatte mit 40 bis 400 U/min gedreht wird.

6. Gewebeverarbeitungsverfahren nach Anspruch 1, wobei das erste Dehydratisierungsreagenz 80 bis 95% Ethylalkohol und 80 bis 95% Isopropylalkohol aufweist.

7. Gewebeverarbeitungsverfahren nach Anspruch 1, wobei das zweite Dehydratisierungsreagenz 99% Ethylalkohol und 99% Isopropylalkohol aufweist.

8. Gewebeverarbeitungsverfahren nach Anspruch 1, wobei das Reinigungsreagenz eines der Folgenden ist:
a) 5% bis 95% Hexan + 5% bis 95% Isopropylalkohol 99,9%;
b) 5% bis 95% Heptan, 5% bis 95% Isopropylalkohol 99,9% und
c) 5% bis 95% Hexan, 5% bis 95% Heptan, +5% bis 95% Isopropylalkohol 99,9%.

9. Gewebeverarbeitungsverfahren nach Anspruch 1, wobei der Paraffinofen ein Mikrowellenofen ist.

10. Gewebeverarbeitungssystem, aufweisend:
a) einen Mikrowellenofen, der ausgebildet ist, einen Korb mit Gewebeproben aufzunehmen und ausgebildet ist, verschiedene Fluide aufzunehmen, wobei die Leistung des Mikrowellenofens einstellbar ist, und wobei
i) der Mikrowellenofen mit einer Drehplatte mit einem Motor ausgestattet ist, um Hot Spots zu vermeiden und eine thermische Homogenität aufrechtzuerhalten, und
ii) die Leistung des Mikrowellenofens zwischen 200 und 700 Watt ist;
b) ein Strömungskühlsystem, um die Temperatur der Fluide innerhalb der Mikrowelle auf einer vorbestimmten Temperatur zu halten;
c) eine Vakuumpumpe, die mit dem Mikrowellenofen verbunden ist, um in dem Mikrowellenofen ein Vakuum zu erzeugen;
d) einen Fixierreagenzbehälter, einen ersten und einen zweiten Alkoholbehälter, einen Reinigungsmittelbehälter, die jeweils über einen Strömungsweg mit einem Kugelventil mit dem Mikrowellenofen verbunden sind;
e) einen mit dem Mikrowellenherd verbundener Flüssigabfallbehälter, und
f) einen Paraffinofen.

11. Gewebeverarbeitungssystem nach Anspruch 10, wobei das Kühlsystem ein Peltier-Element oder ein Luftgebläse mit PWM-Steuerung ist.

12. Gewebeverarbeitungssystem nach einem der Ansprüche 10 oder 11, wobei der Mikrowellenofen eine variable Leistung besitzt.

13. Gewebeverarbeitungssystem nach einem der Ansprüche 10 bis 12, wobei der Motor mit 50 bis 100 U/min drehen kann.

14. Gewebeverarbeitungssystem nach einem der Ansprüche 10 bis 13, wobei der Mikrowellenofen mit einem PTFE-versiegelten Fenster ausgestattet ist.

15. Gewebeverarbeitungssystem nach einem der Ansprüche 10 bis 13, zudem aufweisend einen mit dem Ofen verbundenen Reinigungsreagenzbehälter 113.

## Revendications

1. Procédé de traitement de tissu, comprenant les étapes suivantes :
a) placer un ou plusieurs échantillons de tissu dans un four à micro-ondes ;
b) remplir le four à micro-ondes avec un réactif fixateur jusqu'à un niveau prédéterminé ;
c) chauffer le réactif fixateur à l'aide du four à micro-ondes à une température comprise entre 40 et 60 °C et le maintenir à cette température pendant une durée prédéfinie ;
d) faire circuler le réactif fixateur par un système de contrôle de température afin de maintenir sa température constante pendant qu'il se trouve dans le four à micro-ondes et d'éviter toute surchauffe pendant que le micro-onde fonctionne ;
e) vidanger le réactif fixateur du four ;
f) remplir le four à micro-ondes avec un premier réactif déshydratant jusqu'à un niveau prédéterminé ;
g) chauffer le premier réactif déshydratant à l'aide du four à micro-ondes à une température comprise entre 40 et 60 °C et le maintenir à cette température pendant une durée prédéfinie ;
h) faire circuler le premier réactif déshydratant par un système de contrôle de température afin de maintenir sa température constante pendant qu'il se trouve dans le four à micro-ondes et d'éviter toute surchauffe pendant que le micro-onde fonctionne ;
i) vidanger le premier réactif déshydratant du four ;
j) remplir le four à micro-ondes avec un deuxième réactif déshydratant jusqu'à un niveau prédéterminé ;
k) chauffer le deuxième réactif déshydratant à l'aide du four à micro-ondes à une température comprise entre 40 et 60 °C et le maintenir à cette température pendant une durée prédéfinie ;
l) faire circuler le deuxième réactif déshydratant par un système de contrôle de température afin de maintenir sa température constante pendant qu'il se trouve dans le four à micro-ondes et d'éviter toute surchauffe pendant que le micro-onde fonctionne ;
m) vidanger le deuxième réactif déshydratant du four ;
n) remplir le four à micro-ondes avec un agent d'épuration jusqu'à un niveau prédéterminé ;
o) chauffer l'agent d'épuration à l'aide du four à micro-ondes à une température comprise entre 40 et 60 °C et le maintenir à cette température pendant une durée prédéfinie ;
p) faire circuler l'agent d'épuration par un système de contrôle de température afin de maintenir sa température constante pendant qu'il se trouve dans le four à micro-ondes et d'éviter toute surchauffe pendant que le micro-onde fonctionne ;
q) vidanger l'agent d'épuration du four ;
r) transférer le ou les plusieurs échantillons de tissu dans un four à paraffine ;
s) remplir le four à paraffine avec de la paraffine jusqu'à un niveau prédéterminé ;
t) chauffer la paraffine et le ou les plusieurs échantillons de tissu tout en les faisant tourner à environ 50 à 100 tr/min pour assurer l'homogénéité thermique ;
u) remplacer le réactif d'épuration dans le ou les plusieurs échantillons de tissu par de la paraffine ;
v) vidanger la paraffine du four à paraffine, et
w) enrobant des tissus avec de la paraffine.

2. Procédé de traitement de tissu selon la revendication 1, dans lequel le réactif fixateur est transféré dans le four à micro-ondes en générant une pression négative à l'intérieur du four à micro-ondes.

3. Procédé de traitement de tissu selon la revendication 1, dans lequel la pression négative à l'intérieur du four à micro-ondes et du four à paraffine est comprise entre 200 et 700 mbar.

4. Procédé de traitement de tissu selon la revendication 1, dans lequel le réactif fixateur comprend une solution saline tamponnée au phosphate de 0,1 à 1,0 gramme/litre de thymol et de formol à 0,1 à 1% NB.

5. Procédé de traitement de tissu selon la revendication 1, dans lequel le plateau rotatif est mis en rotation à une vitesse comprise entre 40 et 400 tr/min.

6. Procédé de traitement de tissu selon la revendication 1, dans lequel le premier réactif déshydratant comprend 80 à 95% d'alcool éthylique et 80 à 95% d'alcool isopropylique.

7. Procédé de traitement de tissu selon la revendication 1, dans lequel le deuxième réactif déshydratant comprend 99% d'alcool éthylique et 99% d'alcool isopropylique.

8. Procédé de traitement de tissu selon la revendication 1, dans lequel le réactif d'épuration est l'un quelconque parmi
a) 5% à 95% d'hexane + 5% à 95% d'alcool isopropylique à 99,9% ;
b) 5 % à 95 % d'heptane, 5% à 95% d'alcool isopropylique à 99,9%, et
c) 5% à 95% d'hexane, 5% à 95% d'heptane, +5% à 95% d'alcool isopropylique à 99,9%.

9. Procédé de traitement de tissu selon la revendication 1, dans lequel le four à paraffine est un four à micro-ondes.

10. Système de traitement de tissu, comprenant :
a) un four à micro-ondes configuré pour recevoir un panier d'échantillons de tissu et configuré pour recevoir divers fluides, dans lequel la puissance du four à micro-ondes est réglable, et dans lequel
i) le four à micro-ondes est équipé d'un plateau rotatif muni d'un moteur, pour protéger contre des points chauds et maintenir l'homogénéité thermique, et
ii) la puissance du four à micro-ondes est comprise entre 200 et 700 watts ;
b) un système de refroidissement à circulation pour maintenir la température des fluides à l'intérieur du four à micro-ondes à une température prédéterminée ;
c) une pompe à vide reliée au four à micro-ondes pour créer un vide à l'intérieur du four à micro-ondes ;
d) un récipient de réactif fixateur, un premier et un deuxième récipient d'alcool, un récipient d'agent d'épuration, chacun étant relié au four à micro-ondes par un circuit d'écoulement muni d'une soupape sphérique ;
e) un récipient de liquides usagés relié au four à micro-ondes, et
f) un four à paraffine.

11. Système de traitement de tissu selon la revendication 10, dans lequel le système de refroidissement est un système Peltier ou un ventilateur à air avec un contrôleur PWM.

12. Système de traitement de tissu selon l'une des revendications 10 ou 11, dans lequel le four à micro-ondes a une puissance variable.

13. Système de traitement de tissu selon l'une des revendications 10 à 12, dans lequel le moteur peut tourner à une vitesse comprise entre 50 et 100 tr/min.

14. Système de traitement de tissu selon l'une des revendications 10 à 13, dans lequel le four à micro-ondes est équipé d'une fenêtre scellée en PTFE.

15. Système de traitement de tissu selon l'une des revendications 10 à 13, comprenant en outre un récipient de réactif d'épuration 113 relié au four.
